# EUROPEAN PATENT APPLICATION

(11) **EP 3 239 030 A1**
(43) Date of publication of application: **01.11.2017**
(21) Application number: 17168332.9
(22) Date of filing: 27.04.2017
(51) Int. Cl.: B62K 27/02, B62K 27/00

(54) **CART FOR BIKE**

(30) Priority: 28.04.2016 EP 16167384
(71) Applicant: Sentier S.r.l., 38068 Rovereto (TN) (IT)
(72) Inventor: SIGNORETTO, Andrea, 38068 Rovereto (TN) (IT)
(74) Representative: Laghi, Alberto

(57) **Abstract**

A cart (C) for bicycle comprises a container (K) suitable to support a luggage bag (2), first fork means (1) for the connection to the said bicycle and anchored to a front portion of the said container (K); and second fork means (7) anchored to a rear portion of the said container (K) and suitable to support movable wheel means (3) of the said cart (C).

## Description

The present invention relates to a cart for bicycle.

The present invention is advantageously used in the field of accessories for bicycles or similar vehicles with two or more wheels, to which the following description will make explicit reference without for this reason losing generality, to carry luggage, personal belongings and various articles during journeys or tourist routes.

In general, as an accessory for bicycles, additional bags (*pannier bags*) are universally known and suitable to be mounted laterally in couple straddling on the rear wheel of the bicycle itself, supported by specific luggage rails, or otherwise secured to the frame of the bicycle itself (*bicycle packing*), in order to let the cyclist easily carry his own personal luggage, food, water reserves, etc. or similar products.

The use of such bags, which are often very bulky and little spacious, despite of the plurality of available loads, always makes it necessary to use belt means or equivalent to fix as securely as possible the bags themselves to the bicycle so as to avoid that they fall down during the movement.

Carts having their own pair of wheels and connecting rods suitable to be attached to the rear of the bicycle in different ways, such as to the hub of the rear wheel of the bicycle or directly connected to the seat post under the saddle of the bicycle itself, are also known.

Such known carts, usually bulky and often expensive, require frequent regulations and adjustments which often make cycling unpleasant.

It should also be noted that such carts are particularly bulky when not in use and require "special" management in case of transportation on public transport or airplanes.

Therefore, the object of the present invention is to overcome the drawbacks and issues of the above-mentioned known art.

In particular, an object of the present invention is to provide a cart easily and quickly fastening and suitable to all existing bicycle types.

Another object of the present invention is to provide a cart for bicycle which is comfortable, spacious and easily foldable so as to reduce the size and to be efficiently stored during transports by airplane, train or equivalent means of transport.

A further object of the present invention is to provide a cart for bicycle with great flexibility and cost-effective.

The structural and functional features of the present invention and its advantages over the known art will be clearer and more evident from the claims below, and in particular from an examination of the following description, made with reference to the attached drawings which show a preferred but non-limiting embodiment of the present cart for bicycle, wherein:
- Figure 1 is a schematic side view of the present cart;
- Figure 2 is a perspective view of the present cart;
- Figure 3 is a schematic side view of the cart of Figure 1 highlighting a component in some different operating positions;
- Figure 4 shows a plan bottom view of the present cart;
- Figure 5 is a front view of the present cart;
- Figure 6 shows a plan top view of the present cart;

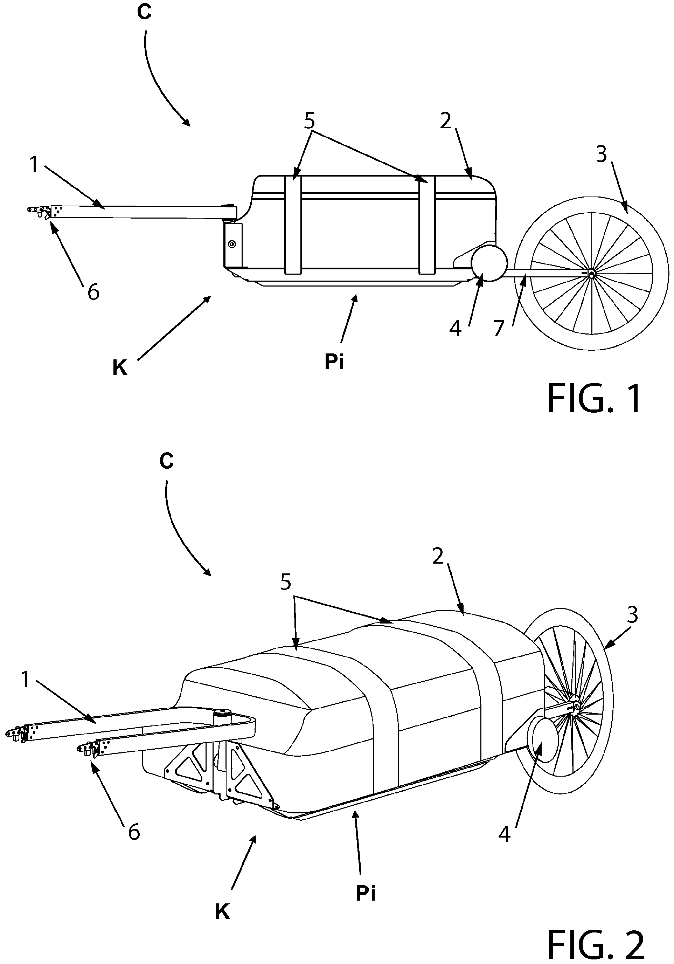

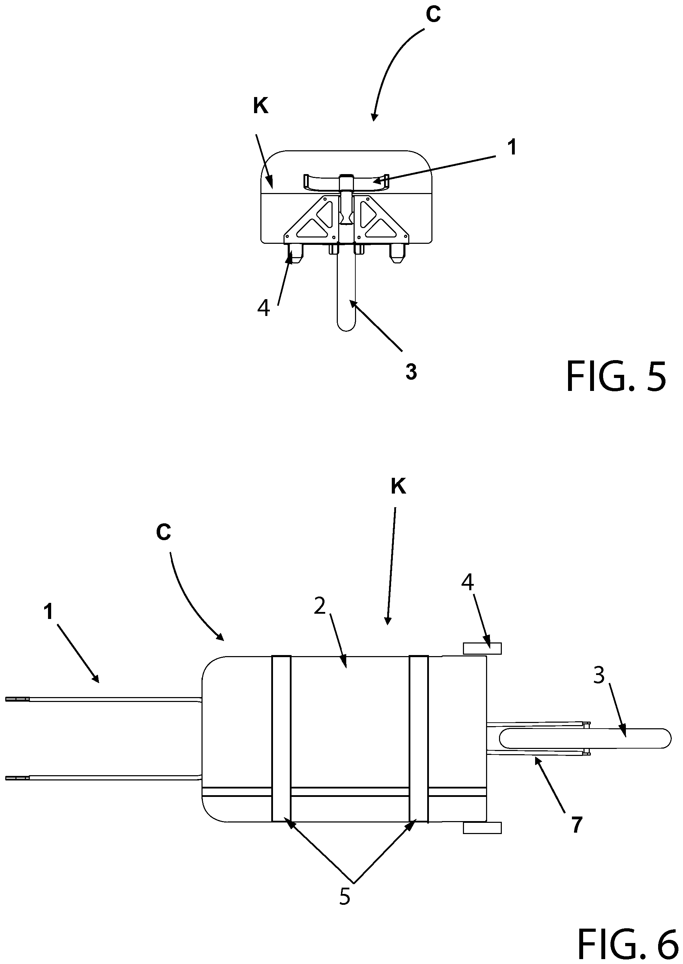

With reference to the appended Figures 1 to 6, C generally refers to a cart suitable to be connected to a bicycle (not shown) to carry luggage, personal belongings and various articles during journeys or tourist routes to be performed with the bicycle itself. The cart C includes:
- a semi-rigid container K, which supports a bag 2 suitable to contain luggage, etc. and preferably in waterproof textile material or equivalent material, and provided with compression and fastening belts 5;
- a front fork 1 suitable for the attachment and fastening to the bicycle frame, in particular to the hub of the rear wheel, one end of the fork 1 is anchored to a lower rigid portion Pi of the container K, whereas an opposite end is provided with coupling means 6 for the frame of any type of bicycle (racing bicycle, mountain bike, cyclocross or electric bicycles, etc.);
- a rear fork 7, which is also anchored to the rigid lower portion Pi of the container K and supporting a movement wheel 3 of the cart C; preferably, such fork 7 is provided with an extensible or foldable/tiltable structure.

A little wheel 4 is mounted on both sides of a rear end area near said wheel 3 of said rigid lower portion of the cart C, so that the cart C itself can be advantageously transformed into a comfortable trolley in order to allow an easy and comfortable transport of the cart C itself during transports to the airport, train station or the like.

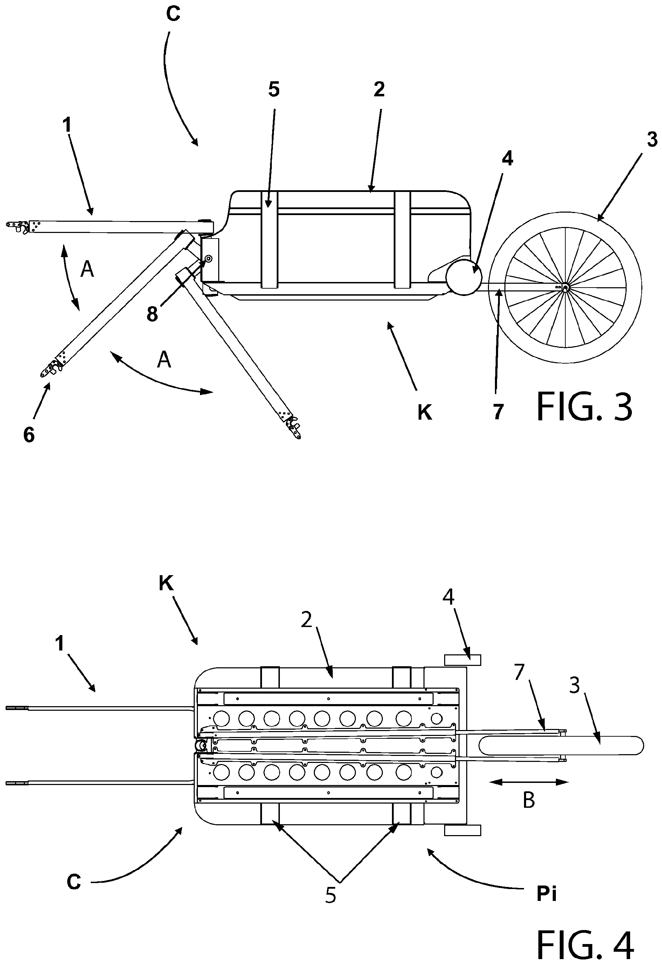

In addition, as well illustrated in figure 3 (position A), the fork 1 is fastened to said rigid lower portion of the container K in a tiltable manner and disappearing on the container K itself, being hinged about a horizontal pin 8 being part of the container K itself.

In this way, the cart C also has the following additional advantages:
- simplified luggage handling as a single volume;
- possibility to be secured to any bicycle without the need to install luggage racks or other accessories affecting the ergonomic and aesthetic features of the bicycle and the weight of the structure;
- reduced learning time of the driving of the vehicle; the single-wheeled cart is, by its nature, much easier to drive (thanks to the lower centre of gravity) and it needs less training to be used.

## Claims

1. Cart (C) for bicycle, **characterized in that** it comprises a container (K) suitable to support a luggage bag (2), first fork means (1) for the connection to the said bicycle and anchored to a front portion of the said container (K); and second fork means (7) anchored to a rear portion of the said container (K) and suitable to support movable wheel means (3) of the said cart (C).

2. Cart according to claim 1, **characterized in that** the said first fork means (1) are hinged to said container (K).

3. Cart according to claim 1 or 2, **characterized in that** the said second fork means (7) have an extensible structure.

4. Cart according to claim 1 or 2, **characterized in that** the said second fork means (7) have a foldable or tiltable structure.

5. Cart according to one or more of the preceding claims 1 to 4, **characterized in that** it also comprises wheel means (4) mounted at a rear end portion of the said container (K).

6. Cart according to one or more of the claims 1 to 4, **characterized in that** the said luggage bag (2) is made of waterproof textile material or the like.

7. Cart according to claim 5, **characterized in that** the said luggage bag (2) is provided with compression belt means (5).

8. Cart according to one or more of claims 1 to 7, **characterized in that** the said wheel means (3) include a single wheel (3).
